# EUROPÄISCHE PATENTANMELDUNG

(11) **EP 1 953 572 A2**
(43) Veröffentlichungstag der Anmeldung: **06.08.2008**
(21) Anmeldenummer: 07122720.1
(22) Anmeldetag: 10.12.2007
(51) Int. Cl.: G01W 1/14

(54) **Niederschlagsmengenmessgerät**

(30) Priorität: 31.01.2007 DE 102007004705
(71) Anmelder: Elsner Elektronik GmbH, 75391 Gechingen (DE)
(72) Erfinder: Merz, Michael, 71065, Sindelfingen (DE)
(74) Vertreter: Bongen, Renaud & Partner

(57) **Zusammenfassung**

Niederschlagsmengenmessgerät mit
- einem Auffangbehälter (2), der auf einer vorgegebenen Auffangfläche (1) niedergehenden Niederschlag aufnimmt und
- einer Messeinrichtung (3), für die aufgenommene Niederschlagsmenge
gekennzeichnet durch einen am Auffangbehälter angeordneten Siphon mit einer am Boden bzw. in einer tiefen Zone des Auffangbehälters angeordneten Eingangsöffnung einer Steigleitung und einer unterhalb des Bodens bzw. der Tiefenzone außerhalb des Behälters angeordneten Ausgangsöffnung einer die Steigleitung fortsetzenden Fallleitung, wobei die Steig- und die Fallleitung in Höhe eines vorgegebenen Maximalpegels (M) des im Behälter aufgenommenen Niederschlags aneinander anschließen.

## Beschreibung

Die Erfindung bezieht sich auf Niederschlagsmengenmessgeräte mit
- einem Auffangbehälter, der auf einer vorgegebenen Auffangfläche niedergehenden Niederschlag aufnimmt und
- einer Messeinrichtung für die aufgenommene Niederschlagsmenge.

Derartige Niederschlagsmengenmessgeräte sind allgemein bekannt. Die Auffangfläche ist beispielsweise trichterartig mit einem in den Auffangbehälter mündenden Auslass ausgebildet. Indem nun regelmäßig der Füllstand des Auffangbehälters registriert wird, kann der jeweilige Niederschlag mengenmäßig erfasst werden. Dabei muss der Auffangbehälter regelmäßig entleert werden, um Zuwächse der Niederschlagsmenge korrekt erfassen zu können. Diese regelmäßige Entleerung ist grundsätzlich unproblematisch, wenn das Niederschlagsmengenmessgerät hinreichend oft von Bedienungspersonal überprüft wird. Dabei kann der Auffangbehälter ohne weiteres durch Umkippen entleert werden.

Dagegen ist die regelmäßige Entleerung problematisch bei bedienerlos betriebenen Niederschlagsmengenmessgeräten. Zwar können am Auffangbehälter ohne weiteres fernsteuerbare Ablassventile angeordnet werden, jedoch lassen sich Fehlfunktionen der Ventile bzw. ihrer Antriebe nicht ausschließen, so dass ein vergleichsweise hoher Wartungsaufwand erforderlich wird.

Aufgabe der Erfindung ist es nun, ein im wesentlichen wartungsfreies Niederschlagsmengenmessgerät zu schaffen. Diese Aufgabe wird erfindungsgemäß gelöst durch einen am Auffangbehälter angeordneten Siphon mit einer am Boden bzw. in einer tiefen Zone des Auffangbehälters angeordneten Eingangsöffnung einer Steigleitung und einer unterhalb des Bodens bzw. der tiefen Zone außerhalb des Behälters angeordneten Ausgangsöffnung einer die Steigleitung fortsetzenden Fallleitung, wobei die Steig- und die Fallleitung in Höhe eines vorgegebenen Maximalpegels des im Behälter aufgenommenen Niederschlags aneinander anschließen.

Die Erfindung beruht auf dem allgemeinen Gedanken, immer dann, wenn der Füllstand des Auffangbehälters einen vorgegebenen Maximalpegel erreicht, eine Zwangsentleerung des Auffangbehälters zu bewirken.

Dies wird mittels des erfindungsgemäß vorgesehenen Siphons ohne jegliche regelmäßig zu wartende Elemente zwangsläufig bewirkt, sobald die entsprechend dem Füllstand des Auffangbehälters in der Steigleitung ansteigende Flüssigkeit den Verbindungsbereich zwischen Steig- und Fallleitung ausfüllt. Nach der durch den Siphon bewirkten Entleerung des Auffangbehälters verbleibt eine Restfüllung, deren Pegel durch den Abstand der Eingangsöffnung vom Behälterboden vorgegeben wird.

Die Erfassung des Füllstandes des Auffangbehälters kann mit praktisch beliebigen Messverfahren erfolgen, wobei im wesentlichen nur Füllstandszuwächse, jedoch keine Absolutwerte des Füllstandes erfasst werden müssen. Insbesondere erübrigt es sich, die Flüssigkeitsmenge bei der Behälterentleerung zu erfassen.

Gegebenenfalls können aber mit einfachsten Mitteln die Zeitpunkte sowie die Zahl der Entleerungsvorgänge erfasst werden, um die Plausibilität der erfassten Zuwächse kontrollieren zu können.

Die Erfassung der Füllstandszuwächse kann beispielsweise durch Messung der Gewichtszuwächse des Auffangbehälters erfolgen. Eine andere vorteilhafte Möglichkeit besteht beispielsweise darin, den Füllstandspegel bzw. dessen Zuwächse mit Abstandssensoren zu erfassen, die beispielsweise ein Ultraschallwellenpaket in Richtung der Flüssigkeitsoberfläche im Auffangbehälter emittieren und die Laufzeit des Ultraschallwellenpaketes erfassen.

Gemäß einer besonders bevorzugten Ausführungsform der Erfindung kann zusätzlich ein Niederschlagssensor vorgesehen sein, um Niederschlagszeiten direkt und nicht nur indirekt über Füllstandsänderungen des Auffangbehälters ermitteln zu können.

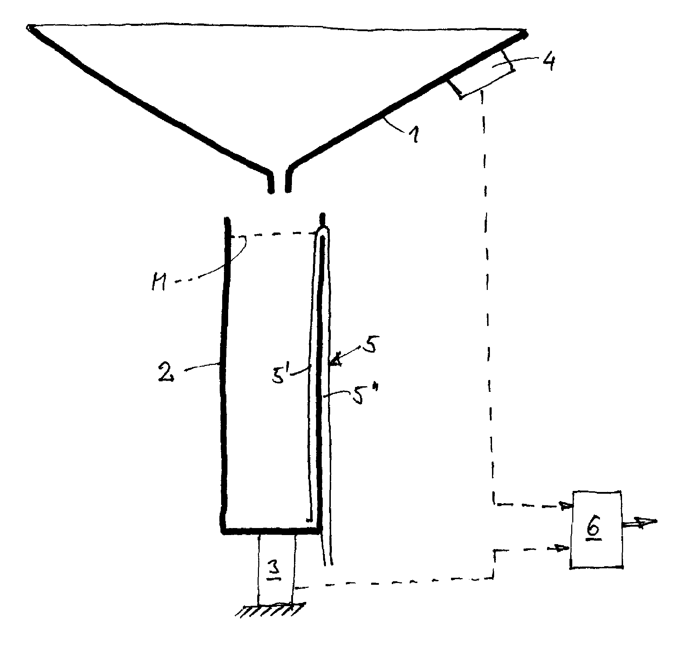

Im übrigen wird hinsichtlich bevorzugter Merkmale der Erfindung auf die Ansprüche und die nachfolgende Erläuterung der Zeichnung verwiesen, anhand der eine besonders bevorzugte Ausführungsform der Erfindung näher beschrieben wird.

Schutz wird nicht nur für ausdrücklich dargestellte oder angegebene Merkmalskombinationen sondern prinzipiell auch für beliebige Kombinationen der dargestellten bzw. angegebenen Merkmale beansprucht.

In der Zeichnung zeigt
die einzige Fig. ein schematisiertes Schnittbild eines erfindungsgemäßen Niederschlagsmengenmessgerätes.

Gemäß der Zeichnung ist eine als Trichter 1 ausgebildete Auffangfläche für niedergehenden Niederschlag vorgesehen. Der Auslass des Trichters 1 mündet in einen Auffangbehälter 2, dem eine Messvorrichtung 3 für den Füllstand des Auffangbehälters zugeordnet ist. Im dargestellten Beispiel erfasst die Messvorrichtung das Gewicht bzw. Gewichtszuwächse des Auffangbehälters 2 und dementsprechend zusätzliche in den Auffangbehälter 2 eingeleitete Niederschlagsmengen. An Stelle einer auf das Gewicht des Behälters 2 reagierenden Messvorrichtung 3 kann auch eine Messvorrichtung vorgesehen sein, die die vom Füllstand abhängige elektrische Kapazität des Behälters 2 erfasst und in Signale für Füllstandszuwächse umsetzt.

Gegebenenfalls kann der Trichter 1 vollständig oder bereichsweise transparent ausgebildet sein, wobei an einem transparenten Bereich ein Niederschlagssensor 4 angeordnet sein kann, um Niederschlagszeiten direkt erfassen zu können. Niederschlagssensoren sind grundsätzlich bekannt und werden bei Kraftfahrzeuge beispielsweise an Windschutzscheiben angeordnet, um die Geschwindigkeit von Scheibenwischern bedarfsgerecht zu steuern. Für die Erkennung von Niederschlag kann beispielsweise der Effekt ausgenutzt werden, dass ein von einem Lichtemitter des Sensors 4 ausgesandter Lichtstrahl verstärkt zu einem Lichtsensor des Niederschlagssensors 4 reflektiert wird, wenn auf den transparenten Bereich des Trichters 1 am Niederschlagssensor 4 Regen- oder Nebeltröpfchen niedergehen.

Bei großen Niederschlagsmengen oder nach mehreren aufeinanderfolgenden Niederschlagsperioden kann der Auffangbehälter 2 überfüllt werden, so dass ohne besondere Maßnahmen eine weitere Erfassung der Niederschlagsmengen unmöglich wird.

Erfindungsgemäß ist vorgesehen, dass der Auffangbehälter 2 automatisch zwangsentleert wird, sobald sein Füllstand einen vorgegebenen Maximalpegel M erreicht.

Um diese Zwangsentleerung ohne störanfällige Apparaturen ermöglichen zu können, ist erfindungsgemäß am Auffangbehälter 2 ein Siphon 5 angeordnet, welcher im wesentlichen aus einer Steigleitung 5' mit einem am Behältergrund bzw. -boden angeordneten Eingang und einer Fallleitung 5" besteht, die in Höhe des vorgegebenen Maximalpegels M des Füllstandes des Auffangbehälters dicht an die Steigleitung 5' anschließt und eine Ausgangsöffnung unterhalb des Bodens bzw. Grundes des Auffangbehälters 2 aufweist.

### Der Siphon 5 funktioniert wie folgt:

Der Flüssigkeitspegel innerhalb der Steigleitung 5' liegt immer auf gleicher Höhe wie der Flüssigkeitspegel im Auffangbehälter 2. Sobald der Flüssigkeitspegel im Auffangbehälter 2 den vorgegebenen Maximalpegel M erreicht, füllt das in entsprechender Weise in der Steigleitung 5' aufgestiegene Wasser den Querschnitt der Verbindung zwischen Steig- und Fallleitung 5' bzw. 5" vollständig aus, weil der Verbindungsbereich mit relativ geringem Querschnitt ausgebildet ist. Gleichzeitig strömt nun Wasser in die Fallleitung 5" ein, wobei über die Steigleitung 5' entsprechende Wassermengen nachströmen. Da der Auslass der Fallleitung 5" unterhalb des Füllstandspegels des Auffangbehälters 2 liegt, wird im Ergebnis erreicht, dass der Auffangbehälter 2 praktisch vollständig entleert wird, sobald der Füllstand den Maximalpegel M erreicht. Die gegebenenfalls im Behälter 2 verbleibende Restmenge wird im wesentlichen durch den vertikalen Abstand der Eingangsöffnung der Steigleitung 5' vom Behälterboden bzw. -grund bestimmt.

Messtechnisch ist die Menge der Restfüllung bedeutungslos. Die auf das Gewicht des Auffangbehälters 2 ansprechende Messeinrichtung 3 muss bei der durch den Siphon 5 erfolgende Entleerung des Auffangbehälters 2 lediglich die Änderungstendenz des Behältergewichtes erkennen, d.h. solange eine Gewichtsabnahme vorliegt, wird der Behälter 2 entleert, sobald wieder eine Gewichtszunahme eintritt, nimmt der Auffangbehälter 2 nach erfolgter Entleerung wieder zusätzliche Niederschlagsmengen auf. Lediglich diese Gewichtszuwächse müssen von der Messvorrichtung 3 zur Erkennung der jeweiligen Niederschlagsmengen registriert werden. Dabei kann die Messvorrichtung 3 ihre Eichung gegebenenfalls regelmäßig selbsttätig überprüfen, da die zwischen zwei Entleerungen des Behälters 2 erfolgenden Gewichtszuwächse in der Summe mit der durch die Form des Behälters 2 vorgegebenen Gewichtsdifferenz zwischen Minimal- und Maximalpegel überstimmen muss.

Die Messvorrichtung 3 sowie der Niederschlagssensor 4 können mit einem Sender 6 verbunden sein, so dass die vom Niederschlagsmengenmessgerät erfassten Niederschlagsmengen bzw. - zeiten an einem entfernten Ort ausgewertet werden können.

## Patentansprüche

1. Niederschlagsmengenmessgerät mit
- einem Auffangbehälter (2), der auf einer vorgegebenen Auffangfläche (1) niedergehenden Niederschlag aufnimmt und
- einer Messeinrichtung (3), für die aufgenommene Niederschlagsmenge
**gekennzeichnet durch** einen am Auffangbehälter (2) angeordneten Siphon (5) mit einer am Boden bzw. in einer tiefen Zone des Auffangbehälters (2) angeordneten Eingangsöffnung einer Steigleitung (5') und einer unterhalb des Bodens bzw. der tiefen Zone außerhalb des Behälters (2) angeordneten Ausgangsöffnung einer die Steigleitung (5') fortsetzenden Fallleitung (5''), wobei die Steig- und die Fallleitung (5', 5'') in Höhe eines vorgegebenen Maximalpegels (M) des im Behälter (2) aufgenommenen Niederschlags aneinander anschließen.

2. Niederschlagsmengenmessgerät nach Anspruch 2,
**dadurch gekennzeichnet,**
**dass** eine nur Füllstandszuwächse im Auffangbehälter (2) erfassende Messeinrichtung (3) vorgesehen ist.

3. Niederschlagsmengenmessgerät nach Anspruch 1 oder 2,
**dadurch gekennzeichnet,**
**dass** ein Regen- bzw. Niederschlagssensor (4) zur Erfassung von Niederschlagszeiten vorhanden ist.

4. Niederschlagsmengenmessgerät nach einem der Ansprüche 1 bis 3,
**dadurch gekennzeichnet,**
**dass** die Messeinrichtung (3) sowie der gegebenenfalls vorhandene Regen- bzw. Niederschlagssensor (4) mit der Eingangsseite eines Senders (6) verbunden sind, der die erfassten Messwerte an eine entfernt angeordnete Auswertestation übermittelt.
